# EUROPEAN PATENT SPECIFICATION

(11) **EP 1 958 687 B1**
(45) Date of publication and mention of the grant of the patent: **23.11.2011**
(21) Application number: 08150727.9
(22) Date of filing: 28.01.2008
(51) Int. Cl.: B01F 17/00, A23D 7/005

(54) **Emulsifier system**
Emulgatorsystem
Système émulsifiant

(30) Priority: 15.02.2007 EP 07102466
(43) Date of publication of application: 20.08.2008
(73) Proprietor: Unilever PLC, London EC4Y 0DY (GB); Unilever N.V., 3013 AL Rotterdam (NL)
(72) Inventor: Binks, Bernard Paul, Hull, Hull Yorkshire HU6 7RX (GB); Frith, William James, Bedford, Bedfordshire MK44 1LQ (GB); Rodrigues, Jhonny Albino, Hull, Hull Yorkshire HU6 7RX (GB)
(74) Representative: Acham, Nicholas Clive

(56) References cited:
- WO-A-2005/039520
- US-A1- 2004 029 978
- QIANG LAN: "Synergistic effect of silica nanoparticle and cetyltrimethylammonium bromide on the stabllization of O/W emulsions" COLLOID AND SURFACES A, [Online] no. 302, 8 February 2007 (2007-02-08), pages 126-135, XP002445033 Retrieved from the Internet: URL:www.sciencedirect.com> [retrieved on 2007-07-30]
- B. P. BINKS ET AL.: "Synergistic Interaction in Emulsions Stabilized by a Mixture of Silica Nanoparticles and Cationic Surfactant" LANGMUIR, vol. 23, 9 January 2007 (2007-01-09), pages 3626-3636, XP002484136
- KUNIO ESUMI ET AL.: "Characterisation of Adsorption of quaternary ammonium Cationic surfactants and Their Adsolubilization behaviors on silica" LANGMUIR, vol. 12, 29 January 1996 (1996-01-29), pages 2130-2135, XP002484123

## Description

The following invention relates to an emulsifier system, which comprises a nanoparticle with a positive or negative charge, and a hydrophobic agent with an opposite charge to that of the particle, such that the hydrophobic agent binds to the nanoparticle and makes the particle hydrophobic, and the use of that system for preparing water-in-oil (W/O) emulsions as well as oil-in-water (O/W) emulsions.

US 2004/0029978 A1 discloses a surfactant formed by at least a particle with nanometric dimensions based on a metal oxide, hydroxide and/or oxy hydroxide, at the surface of which are bound hydrophobic organic chains.

Lan et al, Colloids and Surfaces A Physiochem. Eng. Aspects, 302, 126-135 (2007) discloses the preparation of emulsions stabilised by silica nanoparticles and the cationic surfactant cetyltrimethyl ammonium bromide (CTAB).

WO 2005/039520 A1 discloses a water-in-silicone oil emulsion containing particles of metal oxide having a median particle volume diameter in dispersion in the range from 18-32nm.

Binks et al., Langmuir 2007, 23, 3626-3636 discloses emulsions stabilized by a mixture of silica nanoparticles and cetyltrimethyl ammonium bromide.

Esumi et al., Langmuir 1996, 12, 2130-2135 discloses the adsorption of quaternary ammonium surfactants having two or three long alkyl chains on silica particles.

Therefore the present invention relates to an emulsifier system comprising:
(i) at least one nanoparticle, which has a positive or negative net charge; and
(ii) at least one compound of the opposite charge that is hydrophobic and has the opposite charge to the nanoparticle and will bind to the nanoparticle rendering the nanoparticle hydrophobic.

In a preferred embodiment the emulsifier system, comprises a nanoparticle with a negative net charge and a compound of formula (I) as defined below.

The goal of the present invention was to find an emulsion system, which is very flexible in its use. This means that it can be used for preparing W/O emulsions are well as O/W emulsion.

It has been found that the emulsifier system (ES 1) comprising:
(i) at least one nanoparticle, which has a negative net charge; and
(ii) at least one compound of formula (I) 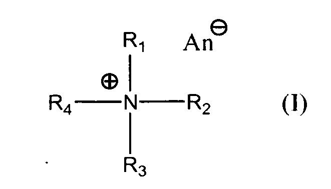
   wherein each R₁, R₂, R₃ and R₄ is independently from each other a linear or branched C₁-C₅ alkyl group, or mono- or poly-alkylene or alkyl group with at least 6 C-atoms, wherein each R₁, R₂, R₃ and R₄ can be unsubstituted or substituted and An^{⊖} is an anion,
   with the proviso that
      (I) at least two of R₁, R₂ R₃ and R₄ are linear or branched, alkyl or mono- or poly-alkylene group with at least 6 C-atoms, which can be unsubstituted, and
      (II) the substituents R₁, R₂, R₃ and R₄ have in total at least 20 carbon atoms,
is suitable for preparing W/O emulsions as well as O/W emulsions.

A nanoparticle is defined for the present patent application as a particle wherein no dimension of the particle is more than 200nm. The compounds of formula (I) bind to the surface of the nanoparticle and make the particle more hydrophobic. Furthermore, depending on the variation of the concentrations of components (i) and (ii), it is also possible to transform a W/O emulsion into an O/W emulsion or to transfer an O/W emulsion into a W/O emulsion.

The advantages of the present emulsifying system are that:
a) it is a very flexible system;
b) a W/O emulsion can be transformed into an O/W emulsion and vice versa by the variation of the ratio of the components (i) and (ii). It is also possible to transform a O/W emulsion into a W/O emulsion and transform it into a O/W emulsion;
c) the O/W emulsion can be produced with a relatively low amount of emulsifying system;
d) it is easy to produce; and
e) the emulsion droplets formed are coated with a layer of particles in a manner similar to a Pickering or Ramsden emulsion.

An oil-in-water emulsion can be distinguished from a water-in-oil emulsion by using an electrical emulsion tester according to common methods. An oil-in-water emulsion will conduct electricity with relatively low resistance since water forms its external or continuous phase, whereas a water-in-oil emulsion will not conduct, or very poorly conduct, electricity.

Each R₁, R₂, R₃ and R₄ can independently from each other be a linear or branched C₁-C₅ alkyl group, which can also be unsubstituted or substituted. Examples of linear unsubstituted C₁-C₅ alkyl groups are -CH₃, -CH₂CH₃, -CH₂CH₂CH₃, -CH₂CH₂CH₂CH₃ and -CH₂CH₂CH₂CH₂CH₃. Examples of branched unsubstituted C₁-C₅ alkyl groups are -CH(CH₃)₂, -CH₂CH(CH₃)₂, -CH(CH₃)CH₂CH₃. In the case that the C₁-C₅ alkyl groups are substituted the substituent(s) can be chosen from the group consisting of OH, COOH, NH₂ or halogen.

Each R₁, R₂, R₃ and R₄ can independently from each other be a linear or branched alkyl group with at least 6 C-atoms, which can be unsubstituted or substituted. Preferably the alkyl group has a chain length of 6 - 30 carbon atoms, more preferably the chain length is 6 - 22 carbon atoms, most preferably the chain length is 6 - 18 carbon atoms. Examples are -(CH₂)₇CH₃, -(CH₂)₉CH₃, -(CH₂)₁₁CH_{3,} -(CH₂)₁₃CH₃, -(CH₂)₁₅CH₃, -(CH₂)₁₇CH₃ and -(CH₂)₁₉CH₃. Also preferred are alkyl groups, which have a chain length of 6 - 30 carbon atoms, more preferably the chain length is 6 - 22 carbon atoms, most preferably the chain length is 6 - 18 carbon atoms, which are substituted by at least one substituent chosen from the group consisting of OH, COOH, NH₂ and halogen.

Each R₁, R₂, R₃ and R₄ can independently from each other be a linear or branched, mono- or poly-alkylene group with at least 6 C-atoms, which can be unsubstituted or substituted. Preferably the alkylene group has a chain lengths of 6 - 30 carbon atoms, more preferably the chain lengths is 6 - 22 carbon atoms, most preferably the chain length is 6 - 18 carbon atoms which are substituted by at least one substituent chosen from the group consisting of OH, COOH, NH₂ and halogen. Examples are -(CH₂)₈CH=CH₂, -(CH₂)₆CH=CH₂CH₃, -(CH₂)₅CH=CH₂(CH₂)₂CH₃ or longer or shorter chains with unsaturated groups somewhere along their length.

In case the alkyl and/or alkylene group is substituted the hydrophobic nature of the carbon chain should not be reduced too much.

Therefore a preferred embodiment of the present invention relates to an emulsifier system (ES 2) comprising:
(i) at least one nanoparticle, which has a negative net charge; and
(ii) at least one compound of formula (I) 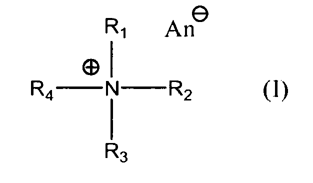
   wherein each R₁, R₂, R₃ and R₄ is independently from each other -CH₃, -CH₂CH₃, -CH₂CH₂CH₃ -CH₂CH₂CH₂CH₃, CH(CH₃)₂, -CH₂CH(CH₃)₂, -CH(CH₃)CH₂CH₃ or a linear or branched C₁-C₅ alkyl group, which is substituted by at least one substituent chosen from the group consisting of OH, COOH, NH₂ and halogen, or each R₁, R₂, R₃ and R₄ is independently from each other a linear or branched, mono- or poly-alkylene or alkyl group with 6 - 30 C-atoms, more preferably with 6 - 22 C-atoms, most preferably with 6 - 18 C-atoms, which can be unsubstituted or substituted and An^{⊖} is an anion,
   with the proviso that
      (I) at least two of R₁, R₂ R₃ and R₄ are linear or branched alkyl groups or mono- or poly-alkylene groups with 6 - 30 C-atoms, more preferably with 6-22 C-atoms, most preferably 6 - 18 C-atoms, which can be unsubstituted or substituted, and
      (II) the substituents R₁, R₂, R₃ and R₄ have in total at least 20 carbon atoms.

Preferred embodiments of the present invention are emulsifier systems wherein R₁ and R₂ are independently from each other linear or branched alkyl groups or mono- or poly-alkylene groups with 6-30 C-atoms, more preferably with 6-22 C-atoms, most preferably 6 - 18 C-atoms, which can be unsubstituted or substituted.

Equally preferred is an emulsifier system according to the present invention wherein R₁, R₂ and R₃ are independently from each other linear or branched alkyl groups or mono- or poly-alkylene groups with 6-30 C-atoms, more preferably with 6-22 C-atoms, most preferably 6 - 18 C-atoms, which can be unsubstituted or substituted.

More preferred embodiments of the present invention are emulsifier systems wherein R₁ and R₂ are independently from each other linear or branched alkyl groups or mono- or poly-alkylene groups with 6-30 C-atoms, more preferably with 6 - 22 C-atoms, most preferably 6-18 C-atoms, which can be unsubstituted or substituted, and R₃ and R₄ are independently of each other -CH₃ or -CH₂CH₃.

More preferred is also an emulsifier system according to the present invention wherein R₁, R₂ and R₃ are independently from each other linear or branched alkyl groups or mono- or poly-alkylene groups with 6 - 30 C-atoms, more preferably with 6 - 22 C-atoms, most preferably 6 - 18 C-atoms, which can be unsubstituted or substituted, and R₄ is -CH₃ or -CH₂CH₃.

The anion (An^{⊖}) can be any anion. Suitable anions are halogen anions. Preferred anions are Cl⁻ or Br⁻, more preferably the anion is Br⁻. It is clear that An^{⊖} can also be a mixture of anions.

The emulsifier system also comprises nanoparticles. The nanoparticles can have any shape, such as spheres, tubes, fibres, as well as ill-defined forms. Preferably the nanoparticles have a longest dimension of 1 - 200, more preferably 1 - 100nm.

It is clear that the nanoparticles used in the emulsifier system need not to be monodisperse. That means the sizes of the nanoparticles in one emulsifier system can vary a lot. The size of the nanoparticles is measured according to well known processes, such as for example light scattering.

Preferred nanoparticles are silica (SiO₂), other oxide nanoparticles, such as TiO₂, ZrO, ZnO, Al₂O₃ as well as clays such a bentonite or laponite.

Therefore a preferred embodiment of the present invention relates to an emulsifier system (ES 3) comprising:
(i) at least one nanoparticle, chosen from the group consisting of silica (SiO₂), other oxide nanoparticles, such as TiO₂, ZrO, ZnO, Al₂O₃ as well as clays such as bentonite or laponite
(ii) at least one compound of formula (I) 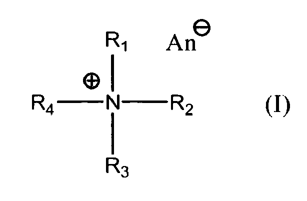
   wherein each R₁, R₂, R₃ and R₄ is independently from each other a linear or branched C₁-C₅ alkyl or mono- or poly-alkylene or alkyl group with at least 6 C-atoms, which can be unsubstituted or substituted and An^{⊖} is an anion,
   with the proviso that
      (I) at least two of R₁, R₂ R₃ and R₄ are independently from each other linear or branched, mono- or poly-alkylene or alkyl group with at least 6 C-atoms, which can be unsubstituted or substituted and
      (II) the substituents R₁, R₂, R₃ and R₄ have in total at least 20 carbon atoms,
   which is suitable for preparing W/O emulsions as well as O/W emulsions.

A more preferred embodiment of the present invention relates to an emulsifier system (ES 4) comprising:
(i) at least one nanoparticle, chosen from the group consisting of silica (SiO₂), other oxide nanoparticles, such as TiO₂, ZrO, ZnO, Al₂O₃ as well as clays such as bentonite or laponite
(ii) at least one compound of formula (I) 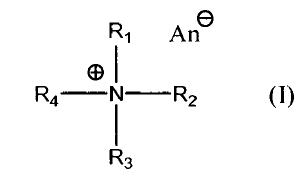 wherein R₁ and R₂ are independently from each other linear or branched alkyl or mono- or poly-alkylene group with 6-30 C-atoms, more preferably with 6 - 22 C-atoms, most preferably 6-18 C-atoms, which can be unsubstituted or substituted, and R₃ and R₄ are independently of each other -CH₃ or -CH₂CH₃, and An^{⊖} is a halogen anion,
   with the proviso that the substituents R₁, R₂, R₃ and R₄ have in total at least 20 carbon atoms.

A more preferred embodiment of the present invention relates to an emulsifier system (ES 5) comprising:
(i) at least one nanoparticle, chosen from the group consisting of silica (SiO₂), other oxide nanoparticles, such as TiO₂, ZrO, ZnO, Al₂O₃ as well as clays such as bentonite or laponite
(ii) at least one compound of formula (I) 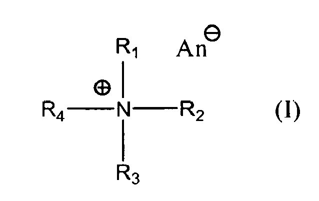
   wherein R₁, R₂ and R₃ are independently from each other linear or branched alkyl or mono-or poly-alkylene groups with 6 - 30 C-atoms, more preferably with 6 - 22 C-atoms, most preferably 6 - 18 C-atoms, which can be unsubstituted or substituted, and R₄ is -CH₃ or -CH₂CH₃, and An^{⊖} is a halogen anion,
   with the proviso that the substituents R₁, R₂, R₃ and R₄ have in total at least 20 carbon atoms.

An emulsifier system according to the present invention usually comprises:
(i) up to 99.99% by weight, based on the total weight of the emulsifier system, of nanoparticles as described above and
(ii) up to 99% by weight, based on the total weight of the emulsifier system of at least one compound of formula (I) as described above,
wherein the sum of (i) and (ii) results in 100% by weight.

The emulsifier system can also comprise further components which are useful in the field of applications wherein W/O or O/W emulsions are used.

The emulsifier system is prepared according to well known methods. The two components can be mixed with or without a mechanical mixer. Usually it is done in an aqueous phase by vigorous mixing. It is also noted that the emulsifier system can be prepared in the oil phase, or nanoparticles may be in the aqueous phase and the compound (I) may be in the oil phase and the two phases mixed.

For the preparation of any emulsion, any oil can be used. The oil can be vegetable, animal, mineral as well as synthetic. The type of oil can be chosen depending on the use of the emulsion.

W/O emulsions usually comprises up to 20% by weight, based on the total weight of the W/O emulsion, of the inventive emulsifier system. A W/O emulsion comprises:
(a) 0.1 to 80% by weight, based on the total weight of the W/O emulsion, of an aqueous phase, and
(b) 20 to 99.9% by weight, based on the total weight of the W/O emulsion, of at least one oil phase, and
(c) 0.01 to 20% by weight, based on the total weight of the W/O emulsion, of at least one emulsifier system as described above, and
(d) 0 to 20% by weight, based on the total weight of the W/O emulsion, of at least one further additive.

O/W emulsions usually comprises up to 20% by weight, based on the total weight of the O/W emulsion, of the inventive emulsifier system. An O/W emulsion comprises:
(a) 20 to 99.9% by weight, based on the total weight of the O/W emulsion, of aqueous phase, and
(b) 0.1 to 75 by weight, based on the total weight of the O/W emulsion, of at least one oil phase, and
(c) 0.01 to 20% by weight, based on the total weight of the O/W emulsion, of at least one emulsifier system as described above, and
(d) 0 to 20% by weight, based on the total weight of the O/W emulsion, of at least one further additive.

An emulsion obtained by using an emulsifying system as described above can be used in many fields of applications, such as the food industry, the pharmaceutical industry, the chemical industry and the home and personal care industry.

### Brief Description of the Drawings

The invention is illustrated with reference to:
Figure 1 which shows the images of emulsions 24h after preparation, wherein on the left is shown an O/W emulsion of example 1, and on the right: a W/O emulsion of example 2 (the numbers indicate di-C₁₀DMAB concentration in mM); and
Figure 2 which shows the microscopy images of emulsions 24h after preparation, wherein on the left: is shown an O/W emulsion of example 1, and on the right: a W/O emulsion of example 2.

### Detailed Description of the Invention

If not otherwise stated the percentages are weight percentages and the temperatures are given in Celsius.

Monodisperse silica particles (Ludox HS-30) were purchased from Grace Davison as an aqueous dispersion (31.6 wt.%) at pH 9.8. The average particle diameter is 15 nm, determined by transmission electron microscopy and dynamic light scattering. The specific surface area is 220 m² g⁻¹. Di-decyldimethylammonium bromide surfactant (di-C₁₀DMAB), of purity > 98% was obtained from Tokyo Chemical Industry Co. n-Dodecane (99%, Aldrich) was columned twice through basic alumina to remove polar impurities. Water was first passed through an Elga reverse osmosis unit and then a Milli-Q reagent water system. Aqueous dispersions of 2 wt.% silica particles were prepared in solutions of surfactant without adjusting the pH. Emulsions of 10 ml containing equal volumes of dodecane and aqueous suspensions containing the particles and surfactant were prepared at 20 °C using an IKA Ultra Turrax T25 homogenizer with a 1 cm head operating at 11,000 rpm for 1 minute. Immediately after emulsification, the emulsion type was determined by drop test and by conductivity using a Jenway 4510 conductivity meter with an epoxy probe.

### Example 1

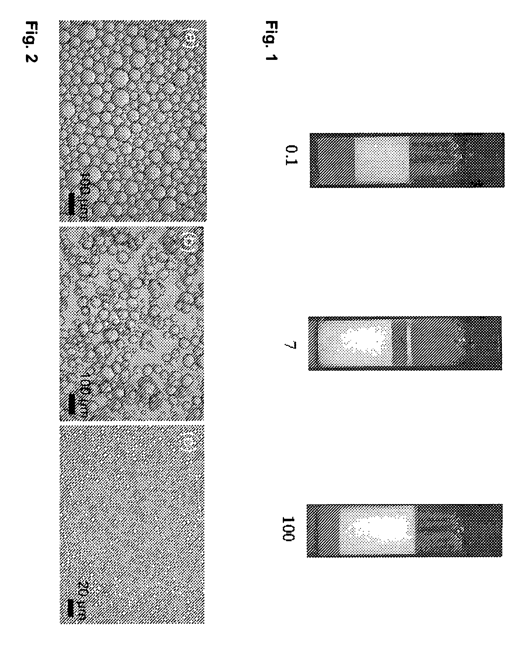

The aqueous phase consisted of 2% w/w of silica particles, as described above, in a solution of 0.1 mM di-C₁₀DMAB (or approximately 0.0041 % w/w), the oil phase was mixed and homogenised as described above. A stable O/W emulsion was produced with a conductivity of 206 µS/cm. Fig. 1 (left hand image) shows the emulsion after 24h. The droplet phase has risen to the surface indicating that it is formed from the oil. A microscope image of the droplets formed is shown in Fig. 2 (left side).

### Example 2

The aqueous phase consisted of 2% w/w of silica particles, as described above, in a solution of 7 mM di-C₁₀DMAB (or approximately 0.28 % w/w), the oil phase was mixed and homogenised as described above. A stable W/O emulsion was produced with a conductivity of 2 µS/cm. Fig. 1 (middle image) shows the emulsion after 24h. The droplet phase has sunk to the bottom indicating that it is formed from the water. A microscope image of the droplets formed is shown in Fig. 2 (middle).

### Example 3

The aqueous phase consisted of 2% w/w of silica particles, as described above, in a solution of 100 mM di-C₁₀DMAB (or approximately 4.1 % w/w), the oil phase was mixed and homogenised as described above. A stable O/W emulsion was produced with a conductivity of 832 µS/cm. Fig. 1 (right hand image) shows the emulsion after 24h. The droplet phase has risen to the top indicating that it is formed from the oil. A microscope image of the droplets formed is shown in Fig. 2 (right side).

## Claims

1. An emulsifier system comprising:
(i) at least one nanoparticle, which has a negative net charge and
(ii) at least one compound of formula (I) 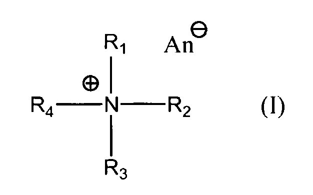
wherein each R₁, R₂, R₃ and R₄ is independently from each other a linear or branched C₁-C₅ alkyl or mono- or poly-alkylene or alkyl group with at least 6 C-atoms, each R₁, R₂, R₃ and R₄ of which can be unsubstituted or substituted and An^{Θ} is an anion,
with the proviso that
(I) at least two of R₁, R₂ R₃ and R₄ are independently from each other linear or branched, alkyl or mono- or poly-alkylene group with at least 6 C-atoms, which can be unsubstituted or substituted or linear or branched, and
(II) the subsitutents R₁, R₂, R₃ and R₄ have in total at least 20 carbon atoms.

2. An emulsifier system according to claim 1 wherein each R₁, R₂, R₃ and R₄ can independently from each other be a linear or branched C₁-C₅ alkyl group, which can also be unsubstituted or substituted.

3. An emulsifier system according to claim 1 or 2 wherein each R₁, R₂, R₃ and R₄ can independently from each other be -CH₃, -CH₂CH₃, CH₂CH₂CH₃, -CH₂CH₂CH₂CH₃ and -CH₂CH₂CH₂CH₂CH₃.

4. An emulsifier system according to claim 1 or 2 wherein each R₁, R₂, R₃ and R₄ can independently from each other be -CH(CH₃)₂, -CH₂CH(CH₃)₂ and -CH(CH₃)CH₂CH₃.

5. An emulsifier system according to any one of the preceding claims, wherein each R₁, R₂, R₃ and R₄ can independently from each other be a linear or branched alkyl group with a chain length of 6 - 30 carbon atoms, more preferably 6-22 carbon atoms, most preferably 6 - 18 carbon atoms.

6. An emulsifier system according to any one of the preceding claims, wherein each R₁, R₂, R₃ and R₄ can independently from each other be -(CH₂)₇CH₃, -(CH_{Z})₉CH₃, - (CH₂)₁₁CH₃,-(CH₂)₁₃CH₃,-(CH₂)₁₅CH₃,-(CH₂)₁₇CH₃ and -(CH₂)₁₉CH₃.

7. An emulsifier system according to any one of the preceding claims, wherein each R₁, R₂, R₃ and R₄ can independently from each other be a linear or branched, mono- or poly-alkylene group with a chain length of 6 - 30 carbon atoms, preferably 6 - 22 carbon atoms, more preferably 6 - 18 carbon atoms.

8. An emulsifier system according to any one of the preceding claims, wherein each R₁, R₂, R₃ and R₄ can independently from each other be -(CH₂)₈CH=CH₂, - (CH₂)₆CH=CH₂CH₃ or -(CH₂)₅CH=CH₂(CH₂)₂CH₃.

9. An emulsifier system according to any one of claims 1, 2, 5 and 7, wherein the C₁₋₅ alkyl, C₆₋₃₀ alkyl, C₆₋₂₂ alkyl, C₆₋₁₈ alkyl and alkylene groups are substituted by at least one substituent chosen from the group consisting of OH, COOH, NH₂ and halogen.

10. An emulsifier system according to any one of the preceding claims, wherein R₁ and R₂ are independently from each other linear or branched alkyl groups or mono-or poly alkylene groups with 6 - 30 C-atoms, more preferably with 6 - 22 C-atoms, most preferably 6 - 18 C-atoms, which can be unsubstituted or substituted, and and R₃ and R₄ are independently of each other -CH₃ or -CH₂CH₃.

11. An emulsifier system according to any one of the preceding claims, wherein R₁, R₂ and R₃ are linear or branched alkyl groups or mono-or poly alkylene groups with 6 - 30 C-atoms, more preferably with 6 - 22 C-atoms, most preferably 6 - 18 C-atoms, which can be unsubstituted or substituted, and R₄ is -CH₃ or CH₂CH₃..

12. An emulsifier system according to any one of the preceding claims, wherein An^{e} is a halogen anion, preferably Cl⁻ or Br⁻.

13. An emulsifier system according to any one of the preceding claims wherein the nanoparticle has a size of 1 - 200, preferably 1 - 100nm.

14. An emulsifier system according to any one of the preceding claims wherein the nanoparticle has a size of 1 - 30nm.

15. An emulsifier system according to any one of the preceding claims wherein the nanoparticles are SiO₂, TiO₂, ZrO, ZnO, Al₂O₃, bentonite and/or laponite.

16. An emulsifier system according to any one of the preceding claims comprising up to 99% by weight, based on the total weight of the emulsifier system, of at least one nanoparticle.

17. An emulsifier system according to any one of the preceding claims comprising up to 99% by weight, based on the total weight of the emulsifier system, of at least one compound of formula (I).

18. A W/O or an O/W emulsion comprising an emulsifier system as defined in any one of the preceding claims.

19. Use of an emulsion according to claim 18 in food products, pharmaceutical products, home care products or personal care products.

## Patentansprüche

1. Emulgatorsystem, umfassend:
(i) wenigstens ein Nanopartikel, das eine negative Nettoladung hat, und
(ii) wenigstens eine Verbindung der Formel (I) 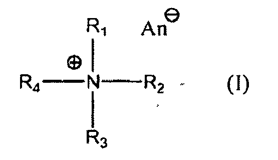
wobei jedes R₁, R₂, R₃ und R₄ unabhängig voneinander eine lineare oder verzweigte C₁-C₅-Alkyl- oder Mono- oder Polyalkylen- oder Alkyl-Gruppe mit wenigstens 6 C-Atomen ist, wobei jedes R₁, R₂, R₃ und R₄ unsubstituiert oder substituiert sein kann und An⁻ ein Anion ist,
mit der Maßgabe, dass
(i) wenigstens zwei von R₁, R₂, R₃ und R₄ unabhängig voneinander eine lineare oder verzweigte Alkyl- oder Mono- oder Polyalkylen-Gruppe mit wenigstens 6 C-Atomen, die unsubstituiert oder substituiert oder linear oder verzweigt sein kann, sind und
(ii) die Substituenten R₁, R₂, R₃ und R₄ insgesamt wenigstens 20 Kohlenstoffatome haben.

2. Emulgatorsystem gemäß Anspruch 1, wobei jedes R₁, R₂, R₃ und R₄ unabhängig voneinander eine lineare oder verzweigte C₁-C₅-Alkyl-Gruppe, die auch unsubstituiert oder substituiert sein kann, sein kann.

3. Emulgatorsystem gemäß Anspruch 1 oder 2, wobei jedes R₁, R₂, R₃ und R₄ unabhängig voneinander -CH₃, -CH₂CH₃, CH₂CH₂CH₃, -CH₂CH₂CH₂CH₃ und -CH₂CH₂CH₂CH₂CH₃ sein kann.

4. Emulgatorsystem gemäß Anspruch 1 oder 2, wobei jedes R₁, R₂, R₃ und R₄ unabhängig voneinander -CH(CH₃)₂, -CH₂CH(CH₃)₂ und -CH(CH₃)CH₂CH₃ sein kann.

5. Emulgatorsystem gemäß einem der vorangehenden Ansprüche, wobei jedes R₁, R₂, R₃ und R₄ unabhängig voneinander eine lineare oder verzweigte Alkyl-Gruppe mit einer Kettenlänge von 6 - 30 Kohlenstoffatomen, bevorzugter von 6 - 22 Kohlenstoffatomen, am bevorzugtesten von 6 - 18 Kohlenstoffatomen, sein kann.

6. Emulgatorsystem gemäß einem der vorangehenden Ansprüche, wobei jedes R₁, R₂, R₃ und R₄ unabhängig voneinander -(CH₂)₇CH₃, -(CH₂)₉CH₃, -(CH₂)₁₁CH₃, -(CH₂)₁₃CH₃, -(CH₂)₁₅CH₃, -(CH₂)₁₇CH₃ und -(CH₂)₁₉CH₃ sein kann.

7. Emulgatorsystem gemäß einem der vorangehenden Ansprüche, wobei jedes R₁, R₂, R₃ und R₄ unabhängig voneinander eine lineare oder verzweigte Mono- oder Polyalkylen-Gruppe mit einer Kettenlänge von 6 - 30 Kohlenstoffatomen, vorzugsweise von 6 - 22 Kohlenstoffatomen, bevorzugter von 6 - 18 Kohlenstoffatomen, sein kann.

8. Emulgatorsystem gemäß einem der vorangehenden Ansprüche, wobei jedes R₁, R₂, R₃ und R₄ unabhängig voneinander -(CH₂)₈CH=CH₂, -(CH₂)₆CH=CH₂CH₃ oder -(CH₂)₅CH=CH₂(CH₂)₂CH₃ sein kann.

9. Emulgatorsystem gemäß einem der Ansprüche 1, 2, 5 und 7, wobei die C₁₋₅-Alkyl-, C₆₋₃₀-Alkyl-, C₆₋₂₂-Alkyl-, C₆₋₁₈-Alkyl- und -Alkylen-Gruppen mit wenigstens einem Substituenten, ausgewählt aus der Gruppe, bestehend aus OH, COOH, NH₂ und Halogen, substituiert sind.

10. Emulgatorsystem gemäß einem der vorangehenden Ansprüche, wobei R₁ und R₂ unabhängig voneinander lineare oder verzweigte Alkyl-Gruppen oder Mono- oder Polyalkylen-Gruppen mit 6 - 30 C-Atomen, bevorzugter mit 6 - 22 C-Atomen, am bevorzugtesten 6 - 18 C-Atomen, die unsubstituiert oder substituiert sein können, sind und R₃ und R₄ unabhängig voneinander -CH₃ oder -CH₂CH₃ sind.

11. Emulgatorsystem gemäß einem der vorangehenden Ansprüche, wobei R₁, R₂ und R₃ lineare oder verzweigte Alkyl-Gruppen oder Mono- oder Polyalkylen-Gruppen mit 6 - 30 C-Atomen, bevorzugter 6 - 22 C-Atomen, am bevorzugtesten 6 - 18 C-Atomen, die unsubstituiert oder substituiert sein können, sind und R₄ -CH₃ oder CH₂CH₃ ist.

12. Emulgatorsystem gemäß einem der vorangehenden Ansprüche, wobei An⁻ ein Halogenanion, vorzugsweise Cl⁻ oder Br⁻, ist.

13. Emulgatorsystem gemäß einem der vorangehenden Ansprüche, wobei das Nanopartikel eine Größe von 1 - 200, vorzugsweise 1 - 100 nm, hat.

14. Emulgatorsystem gemäß einem der vorangehenden Ansprüche, wobei das Nanopartikel eine Größe von 1- 30 nm hat.

15. Emulgatorsystem gemäß einem der vorangehenden Ansprüche, wobei die Nanopartikel SiO₂, TiO₂, ZrO, ZnO, Al₂O₃, Bentonit und/oder Laponit sind.

16. Emulgatorsystem gemäß einem der vorangehenden Ansprüche, das bis zu 99 Gew.-%, bezogen auf das Gesamtgewicht des Emulgatorsystems, aus wenigstens einem Nanopartikel besteht.

17. Emulgatorsystem gemäß einem der vorangehenden Ansprüche, das bis zu 99 Gew.-%, bezogen auf das Gesamtgewicht des Emulgatorsystems, aus wenigstens einer Verbindung der Formel (I) besteht.

18. W/Ö- oder Ö/W-Emulsion, die ein Emulgatorsystem, wie es in einem der vorangehenden Ansprüche definiert ist, umfasst.

19. Verwendung einer Emulsion gemäß Anspruch 18 in Nahrungsmittelprodukten, pharmazeutischen Produkten, Hauspflegeprodukten oder Körperpflegeprodukten.

## Revendications

1. Système émulsifiant comprenant :
(i) au moins une nanoparticule, qui porte une charge négative nette, et
(ii) au moins un composé de formule (I) 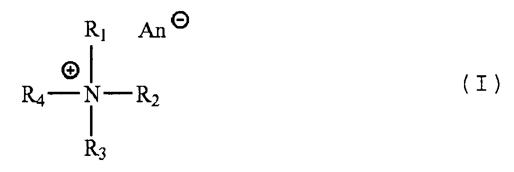
dans laquelle chaque R₁, R₂, R₃ et R₄ est indépendamment l'un de l'autre un groupe alkyle en C₁-C₅ linéaire ou ramifié ou mono- ou poly-alkylène ou alkyle comprenant au moins 6 atomes de carbone, chaque R₁, R₂, R₃ et R₄ pouvant être non substitué ou substitué et An^{Θ} est un anion,
à condition que
(i) au moins deux de R₁, R₂, R₃ et R₄ soient indépendamment l'un de l'autre un groupe alkyle, ou mono- ou poly-alkylène, linéaire ou ramifié comportant au moins 6 atomes de carbone, qui peut être non substitué ou substitué ou linéaire ou ramifié, et
(ii) les substituants R₁, R₂, R₃ et R₄ ont au total au moins 20 atomes de carbone.

2. Système émulsifiant selon la revendication 1, dans lequel chaque R₁, R₂, R₃ et R₄ peut être indépendamment l'un de l'autre un groupe alkyle en C₁-C₅ linéaire ou ramifié, qui peut être aussi non substitué ou substitué.

3. Système émulsifiant selon la revendication 1 ou 2, dans lequel chaque R₁, R₂, R₃ et R₄ peut être indépendamment l'un de l'autre -CH₃, -CH₂CH₃, -CH₂CH₂CH₃, -CH₂CH₂CH₂CH₃ et -CH₂CH₂CH₂CH₂CH₃.

4. Système émulsifiant selon la revendication 1 ou 2, dans lequel chaque R₁, R₂, R₃ et R₄ peut être indépendamment l'un de l'autre -CH(CH₃)₂. -CH₂CH(CH₃)₂ et -CH(CH₃)-CH₂CH₃.

5. Système émulsifiant selon l'une quelconque des revendications précédentes, dans lequel chaque R₁, R₂, R₃ et R₄ peut être indépendamment l'un de l'autre un groupe alkyle linéaire ou ramifié ayant une longueur de chaîne de 6 à 30 atomes de carbone, préférablement 6 à 22 atomes de carbone, et encore plus préférablement de 6 à 18 atomes de carbone.

6. Système émulsifiant selon l'une quelconque des revendications précédentes, dans lequel chaque R₁, R₂, R₃ et R₄ peut être indépendamment l'un de l'autre -(CH₂)₇CH₃, -(CH₂)₉CH₃, -(CH₂)₁₁CH₃, -(CH₂)₁₃CH₃, -(CH₂)₁₅CH₃, - (CH₂)₁₇CH₃ et - (CH₂)₁₉CH₃.

7. Système émulsifiant selon l'une quelconque des revendications précédentes, dans lequel chaque R₁, R₂, R₃ et R₄ peut être indépendamment l'un de l'autre un groupe mono- ou poly-alkylène linéaire ou ramifié ayant une longueur de chaîne de 6 à 30 atomes de carbone, préférablement de 6 à 22 atomes de carbone, et encore plus préférablement de 6 à 18 atomes de carbone.

8. Système émulsifiant selon l'une quelconque des revendications précédentes, dans lequel chaque R₁, R₂, R₃ et R₄ peut être indépendamment l'un de l'autre -(CH₂)₈CH=CH₂, -(CH₂)₆CH=CH₂CH₃ ou -(CH₂)₅CH=CH₂(CH₂)₂CH₃.

9. Système émulsifiant selon l'une quelconque des revendications 1, 2, 5 et 7, dans lequel les groupes alkyle en C₁-C₅, alkyle en C₆-C₃₀, alkyle en C₆-C₂₂, alkyle en C₆-C₁₈ et alkylène sont substitués par au moins un substituant choisi dans le groupe constitué par OH, COOH, NH₂ et les halogènes.

10. Système émulsifiant selon l'une quelconque des revendications précédentes, dans lequel R₁ et R₂ sont indépendamment l'un de l'autre des groupes alkyle ou des groupes mono- ou poly-alkylène linéaires ou ramifiés comportant 6 à 30 atomes de carbone, plus préférablement 6 à 22 atomes de carbone, et encore plus préférablement 6 à 18 atomes de carbone, qui peuvent être non substitués ou substitués et R₃ et R₄ sont indépendamment l'un de l'autre -CH₃ ou -CH₂CH₃.

11. Système émulsifiant selon l'une quelconque des revendications précédentes, dans lequel R₁, R₂ et R₃ sont des groupes alkyle ou des groupes mono- ou poly-alkylène linéaires ou ramifiés comportant 6 à 30 atomes de carbone, plus préférablement 6 à 22 atomes de carbone, et encore plus préférablement 6 à 18 atomes de carbone, qui peuvent être non substitués ou substitués et R₄ est -CH₃ ou -CH₂CH₃.

12. Système émulsifiant selon l'une quelconque des revendications précédentes, dans lequel An^{Θ} est un anion d'halogène, de préférence Cl⁻ ou Br⁻.

13. Système émulsifiant selon l'une quelconque des revendications précédentes, dans lequel la nanoparticule a une taille de 1 à 200, de préférence de 1 à 100 nm.

14. Système émulsifiant selon l'une quelconque des revendications précédentes, dans lequel la nanoparticule a une taille de 1 à 30 nm.

15. Système émulsifiant selon l'une quelconque des revendications précédentes, dans lequel les nanoparticules sont SiO₂, TiO₂, ZrO, ZnO, Al₂O₃, la bentonite et/ou la laponite.

16. Système émulsifiant selon l'une quelconque des revendications précédentes comprenant jusqu'à 99 % en poids, par rapport au poids total du système émulsifiant, d'au moins une nanoparticule.

17. Système émulsifiant selon l'une quelconque des revendications précédentes comprenant jusqu'à 99 % en poids, par rapport au poids total du système émulsifiant, d'au moins un composé de formule (I).

18. Émulsion eau dans huile ou huile dans eau comprenant un système émulsifiant selon l'une quelconque des revendications précédentes.

19. Utilisation d'une émulsion selon la revendication 18 dans des produits alimentaires, des produits pharmaceutiques, des produits ménagers ou des produits d'hygiène personnelle.
